# EUROPEAN PATENT APPLICATION

(11) **EP 1 237 320 A1**
(43) Date of publication of application: **04.09.2002**
(21) Application number: 01980961.5
(22) Date of filing: 02.11.2001
(51) Int. Cl.: H04L 9/00, G11B 20/10, G10L 11/00

(54) **ENCIPHERING DEVICE AND METHOD, DECIPHERING DEVICE AND METHOD, AND STORAGE MEDIUM**

(30) Priority: 06.11.2000 JP 2000337307; 09.03.2001 JP 2001066850
(71) Applicant: Sony Corporation, Tokyo 141-0001 (JP)
(72) Inventor: SAKO, Yoichiro, C/O SONY CORPORATION, Tokyo 141-0001 (JP); FURUKAWA, Shunsuke, C/O SONY CORPORATION, Tokyo 141-0001 (JP); INOKUCHI, Tatsuya, C/O SONY CORPORATION, Tokyo 141-0001 (JP); KIHARA, Takashi, C/O SONY CORPORATION, Tokyo 141-0001 (JP)
(74) Representative: Mills, Julia
(86) International application number: JP0109624
(87) International publication number: WO02037747

(57) **Abstract**

When content data is encrypted and recorded, the content data is block-segmented and chain-encrypted. At that point, an initial value is generated using content data of the same sector. When content data is an MPEG stream, an initial value is generated using unique information such as a header. Thus, it is not necessary to generate an initial value using a random number or the like. Thus, there is no loss in the data area. In addition, since content data varies at random, the secrecy of the initial value is high. In addition, since it is not necessary to provide a random number generator or the like, the circuit scale does not increase.

## Description

### Technical Field

The present invention relates to an encrypting apparatus, an encrypting method, a decrypting apparatus, a decrypting method, and a storage medium that are suitable for encrypting content data such as audio data and recording the encrypted data to an optical disc such as a CD (Compact Disc) 2 so as to protect the right of the content data when it is recorded to and reproduced from the optical disc.

### Background Art

In recent years, optical discs as large capacity record mediums have been developed. For example, CD (Compact Disc) for music information, CD-ROM (Compact Disc Read Only Memory) for computer data, and DVD (Digital Versatile Disc or Digital Video Disc) for video information are known.

These optical discs are read-only discs. In recent years, optical discs that allow data to be recorded and rewritten such as CD-R (CD-Recordable) disc and CD-RW (CD-Rewritable) disc have been commercially used. In addition, various types of optical discs such as double density CD and CD2 are being developed. The double density CD has the same size as conventional CD, but more storage capacity than that. The CD2 has an affinity to both a conventional CD player and a personal computer.

As such optical discs are becoming common, content data recorded on an optical disc may be illegally copied and used. Alternatively, a copied disc may be illegally sold. As a result, there is a risk of which the copyright owner will suffer a loss from that. To solve such a problem, when content data such as audio data and video data are recorded on optical discs, content data is encrypted so as to protect the right of the copyright owner.

As encrypting systems that are used when content data is recorded on optical discs, block encrypting systems such as DES (Data Encryption Standard) and tipple DES have been used. The DES is a typical common key encrypting system. In the DES, data of 64 bits is initially transposed (scrambled). Data of blocks each of which is composed of 32 bits is successively nonlinearly processed using 16 keys each of which is composed of one encryption key of 56 bits. The processed result is transposed once again and thereby encrypted data is obtained.

However, since the length of each block of the block encrypting system such as DES is relatively short, there is a possibility of which similar blocks often take place. Thus, this system has a problem with respect an encrypting strength.

To improve the encrypting strength, it has been considered to use CBC (Ciphering Block Chaining) system. In the CBC system, encrypted blocks of data are chained so as to improve the encrypting strength.

In other words, in the CBC system, data of a current input block and data of which data of the immediately preceding block was encrypted are ex-ORed and encrypted. When encrypted data is decrypted, data of an encrypted block decrypted. The decrypted data and the data of the immediately preceded encrypted block are ex-ORed. As a result, the data of the original block is obtained. In the CBC system, when data is encrypted, data of the current block is chained with data of the immediately preceding encrypted block data. Thus, the encrypting strength can be improved.

In such a manner, when data of a content is recorded on an optical disc corresponding to the CBC system, the encrypting strength is improved. As a result, the copyright can be more strongly protected. However, according to the CBC system, when data of the current block is changed with data of the immediately preceding encrypted block, data of the first block is encrypted, there is no data of the immediately preceding block, it is necessary to prepare an initial value. As an initial value for an encrypting process corresponding to the CBC system, a fixed value can be used as the simplest method. However, when a fixed value is used to perform an encrypting process corresponding to the CBC system, a problem with respect to secrecy takes place. Thus, even if the CBC system is used, a high encrypting strength cannot be maintained. In addition, to provide a fixed value as an initial value, it is necessary to store the fixed value somewhere.

Thus, it can be considered that an initial value is generated using data in another area contained in an encrypted block. Such data includes for example error correcting ECC (Error Correcting Code) and medium information. These data is not copyrighted data. Thus, it is not necessary to protect such data. Normally, they are not contained in an encrypted block. Thus, it is considered that an initial value is generated using data of another area such as ECC or medium information.

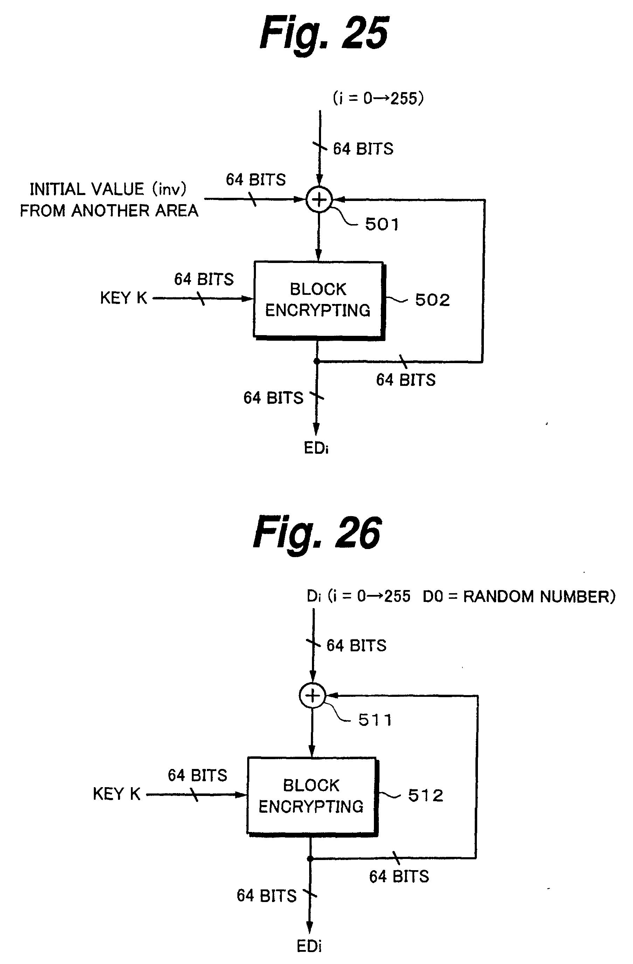

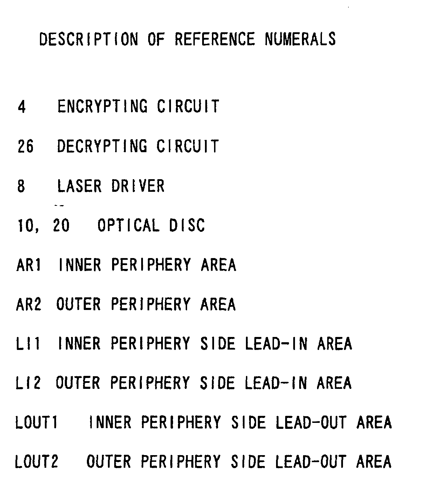

Fig. 25 shows an example of which an initial value used for an encrypting process corresponding to the CBC system is generated using data of another area such as ECC or medium information. As shown in Fig. 25, input block data Di is 256 blocks of data that are block 0 to block 255. Each block is composed of eight bytes (64 bits).

First of all, as an initial value inV, data is input from another area. An ex-OR gate 501 ex-ORes the input block data D0 and the initial value inV. A block encrypting circuit 502 encrypts the output of the ex-OR gate 501 using the key information K and generates encrypted block data ED0.

Thereafter, the ex-OR gate 501 ex-ORes the input block data D1 and the immediately preceding encrypted block data ED0. The block encrypting circuit 102 encrypts the output of the ex-OR gate 501 using the key information K and generates encrypted block data ED1.

In the same manner, the input block data Di and the immediately preceding encrypted block data EDi-1 are ex-ORed. The block encrypting circuit 502 encrypts the output of the ex-OR gate 501 using the key information K and generates encrypted block data EDi.

Thus, when the initial value inV is generated using data of other than blocks (for example, ECC or medium information), since the initial value is not a fixed value, the secrecy is improved.

However, the initial value inV is generated using data of other than blocks (for example, ECC or medium information), data other than data of a content is always required to perform the encrypting process. Thus, it is impossible to encrypt only data of a content and transmit the encrypted data. As a result, when data of a content is transmitted, it is necessary to transmit ECC or medium information along with the data of the content.

As another method for generating an initial value necessary for an encrypting process corresponding to the CBC system, it can be considered that the initial value is generated using a random number.

In other words, as shown in Fig. 26, first of all, a value generated using a random number is placed as an initial value to block data D0.

A block encrypting circuit 512 encrypts the block data D0 to which the initial value was placed using the key information K and generates encrypted block data ED1.

Thereafter, an ex-OR gate 511 ex-ORes input block data D1 and the immediately preceding encrypted block data ED0. The block encrypting circuit 512 encrypts the output of the ex-OR gate 511 using the key information K and generates the encrypted block data ED1.

In the same manner, the input block data Di and the immediately preceding encrypted block data EDi-1 are ex-ORed. The block encrypting circuit 512 encrypts the output of the ex-OR gate 511 using the key information K and generates encrypted block data EDi.

However, when an initial value is generated using a random number, the initial value generated using the random number is placed to the block data D0. Thus, data of a content cannot be placed to the block data D0. As a result, data of a content can be placed to only 2040 bytes of 256 blocks (2048) bytes of blocks 0 to 255 of one sector. Consequently, the data area cannot be effectively used.

In addition, to generate an initial value using a random number, a random number generating circuit is required. To improve the secrecy, it is necessary to generate a random code as a random number. However, when such a random number generating circuit is disposed, the circuit scale adversely increases.

Therefore, an object of the present invention is to provide an encrypting apparatus, an encrypting method, a decrypting apparatus, a decrypting method, and a storage medium that do not require data of a special area or a random number for an initial value necessary for a chain-encrypting process and that allow the secrecy of data to be improved.

Another object of the present invention is to provide an encrypting apparatus, an encrypting method, a decrypting apparatus, a decrypting method, and a storage medium that allow the data area to be effectively used when a chain-encrypting process is performed.

### Disclosure of the Invention

The present invention is an encrypting apparatus, comprising a generating means for generating an initial value using data of a first portion of content data, and an encrypting means for encrypting data of a second portion of the content data using the generated initial value, outputting the encrypted data, and chain-encrypting data of portions other than the first portion and the second portion of the content data using the output encrypted data.

The present invention is an encrypting method, comprising the steps of generating an initial value using data of a first portion of content data, and encrypting data of a second portion of the content data using the generated initial value, outputting the encrypted data, and chain-encrypting data of portions other than the first portion and the second portion of the content data using the output encrypted data.

The present invention is a decrypting apparatus, comprising a decrypting means for decrypting data of a second portion of encrypted content data using an initial value that is data of a first portion of the encrypted content data, outputting the decrypted data, and chain-decrypting data of portions other than the first portion and the second portion using the data of the second portion of the encrypted content data, and a generating means for generating the data of the first portion using the data of the first portion of the encrypted content data.

The present invention is a decrypting method, comprising the steps of decrypting data of a second portion of encrypted content data using an initial value that is data of a first portion of the encrypted content data and outputting the decrypted data, chain-decrypting data of portions other than the first portion and the second portion using the data of the second portion of the encrypted content data, and generating the data of the first portion using the data of the first portion of the encrypted content data.

The present invention is a storage medium for storing data encrypted corresponding to an encrypting method, comprising the steps of generating an initial value using data of a first portion of content data, and encrypting data of a second portion of the content data using the generated initial value, outputting the encrypted data, and chain-encrypting data of portions other than the first portion and the second portion of the content data using the output encrypted data.

The present invention is an encrypting apparatus, comprising a generating means for generating an initial value using data of a predetermined portion of a stream of content data, and an encrypting means for encrypting the content data using the generated initial value, outputting the encrypted data, and chain-encrypting data of other portions of the content data using the output encrypted data.

The present invention is an encrypting method, comprising the steps of generating an initial value using data of a predetermined portion of a stream of content data, and encrypting the content data using the generated initial value, outputting the encrypted data, and chain-encrypting data of other portions of the content data using the output encrypted data.

The present invention is a decrypting apparatus, comprising a generating means for generating an initial value using data of a predetermined portion of a stream of content data, and a decrypting means for decrypting data of a first portion of encrypted content data using the initial value, outputting the decrypted data, and chain-decrypting data of a second portion that is different from the first portion using the data of the first portion of the encrypted content data.

The present invention is a decrypting method, comprising the steps of generating an initial value using data of a predetermined portion of a stream of content data, and decrypting data of a first portion of encrypted content data using the initial value and outputting the decrypted data, and chain-decrypting data of a second portion that is different from the first portion using the data of the first portion of the encrypted content data.

The present invention is a storage medium for storing data decrypted corresponding to a decrypting method, comprising the steps of generating an initial value using data of a predetermined portion of a stream of content data, and decrypting data of a first portion of encrypted content data using the initial value and outputting the decrypted data, and chain-decrypting data of a second portion that is different from the first portion using the data of the first portion of the encrypted content data.

Data of a content is block segmented and chain-encrypted. An initial value for the encrypting process is generated using the current sector of the data of the content. Thus, it is not necessary to generate the initial value using a random number or the like. As a result, there is no loss in the data area. In addition, since data of a content varies at random, the secrecy is high. In addition, since it is not necessary to provide a random number generator or the like, the circuit scale does not increase.

In addition, an initial value generated using data of a content is encrypted using data of another content. Moreover, data of a content used as an initial value can be freely selected. Thus, the secrecy further improves.

When an MPEG stream is recorded, an initial value is generated using unique information contained in a header. The information of the header is unique. Time information such as SCR and PTS chronologically varies. Thus, the secrecy is high. In addition, since an initial value for an encrypting process is generated using information of a header of an MPEG stream, the MPEG stream can be directly transmitted. Moreover, since it is not necessary to provide a random number generator or the like, the circuit scale does not increase.

### Brief Description of Drawings

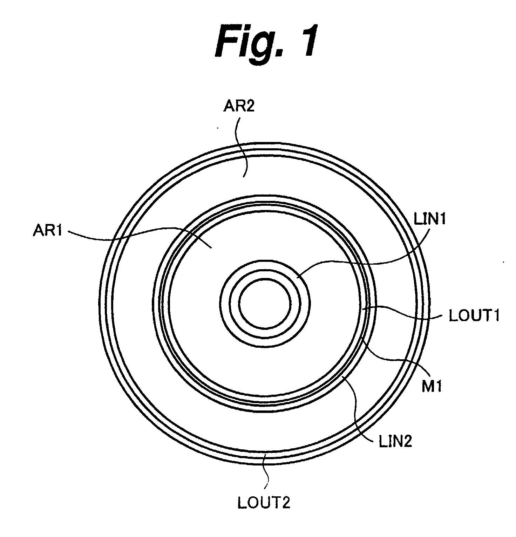

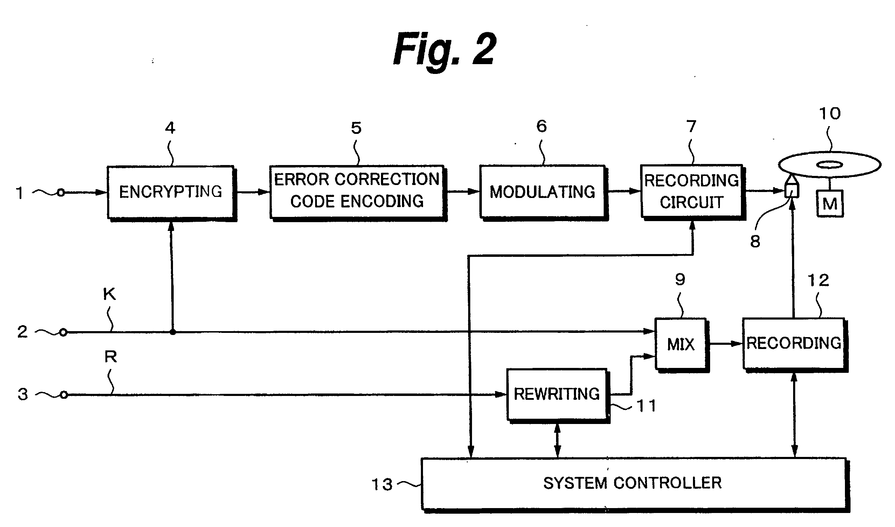

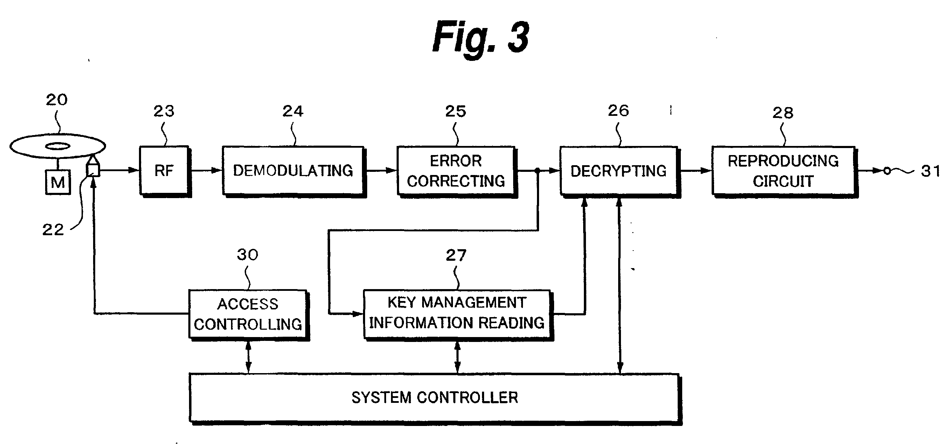

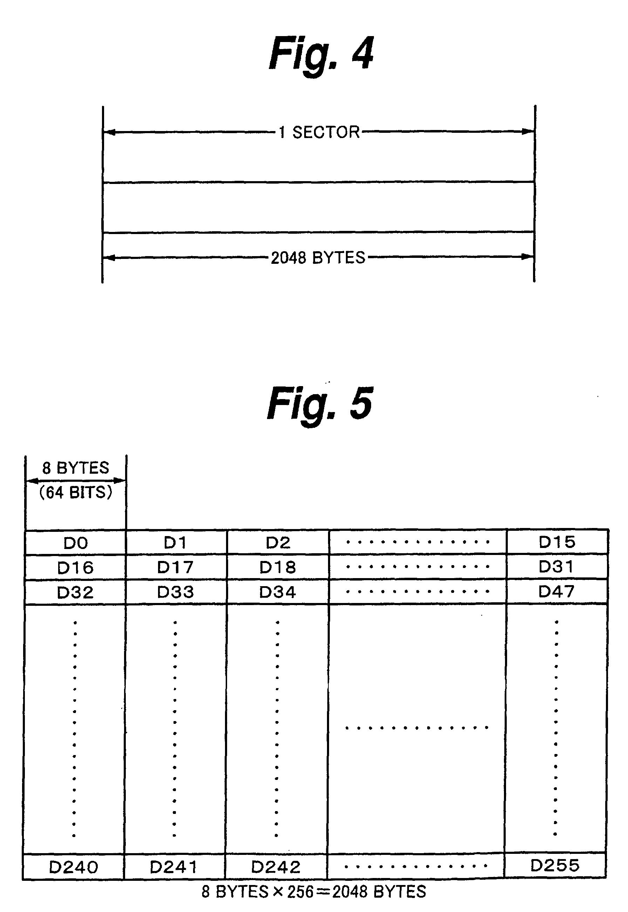

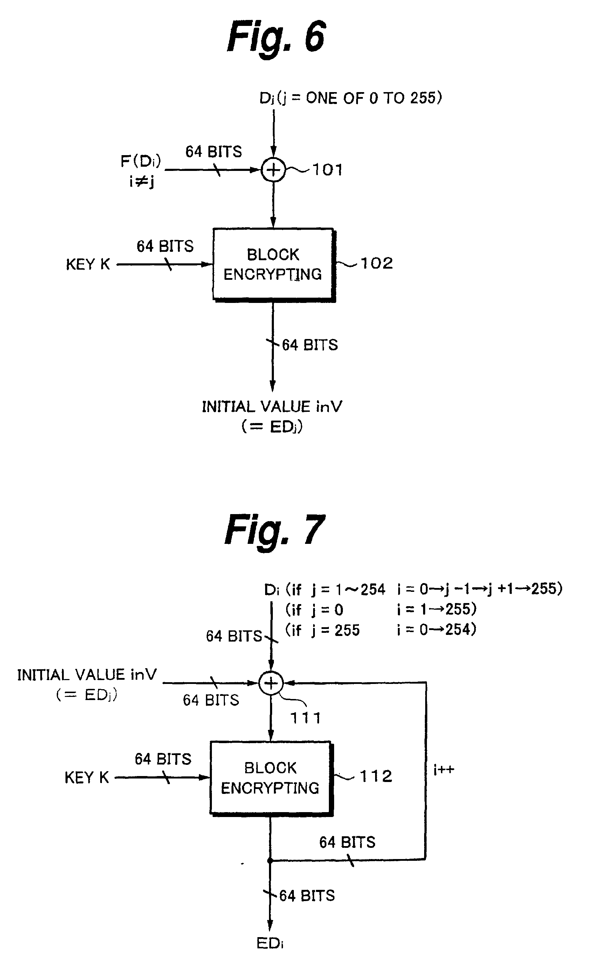

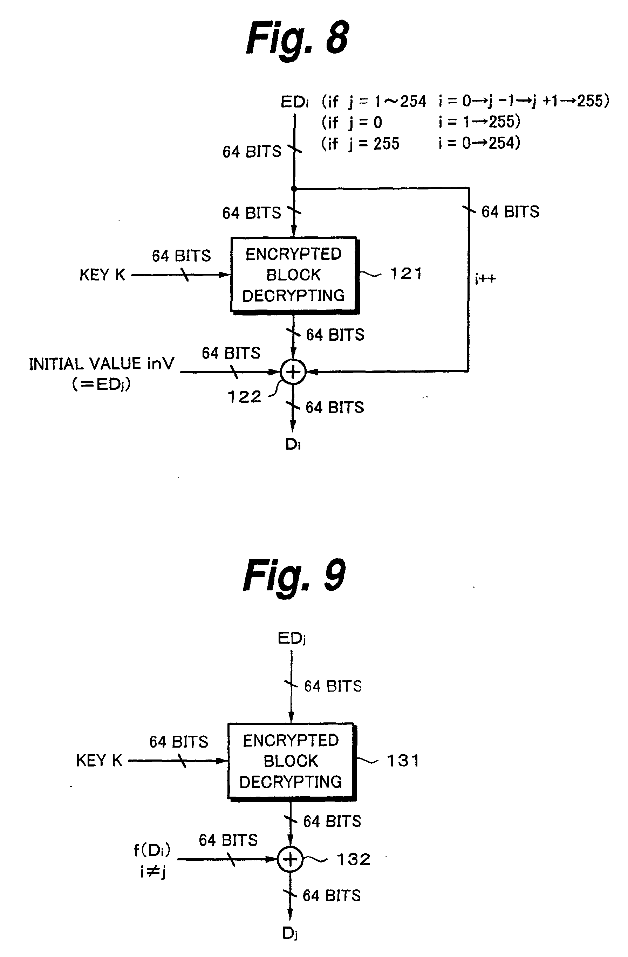

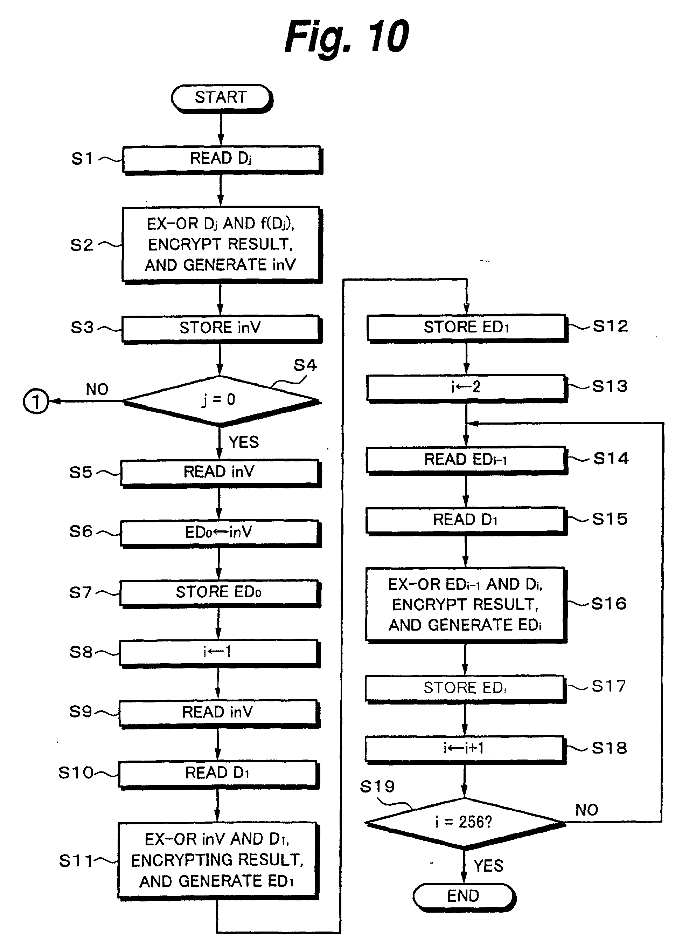

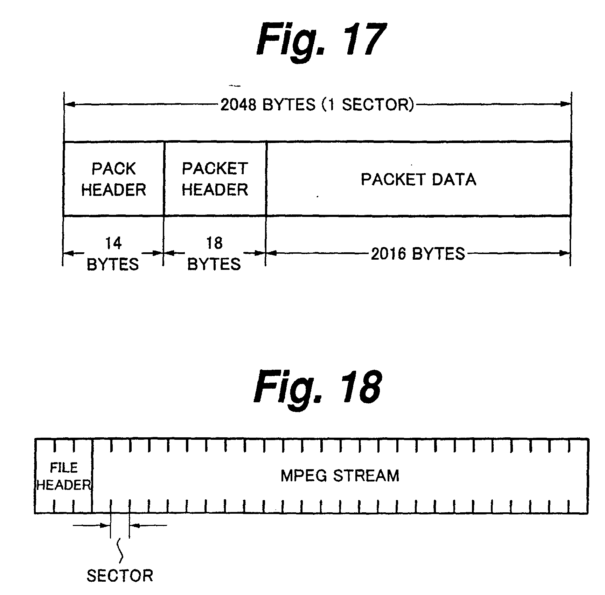

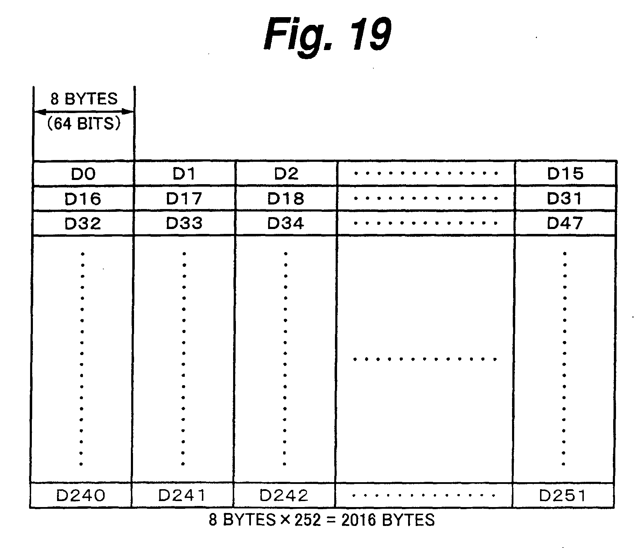

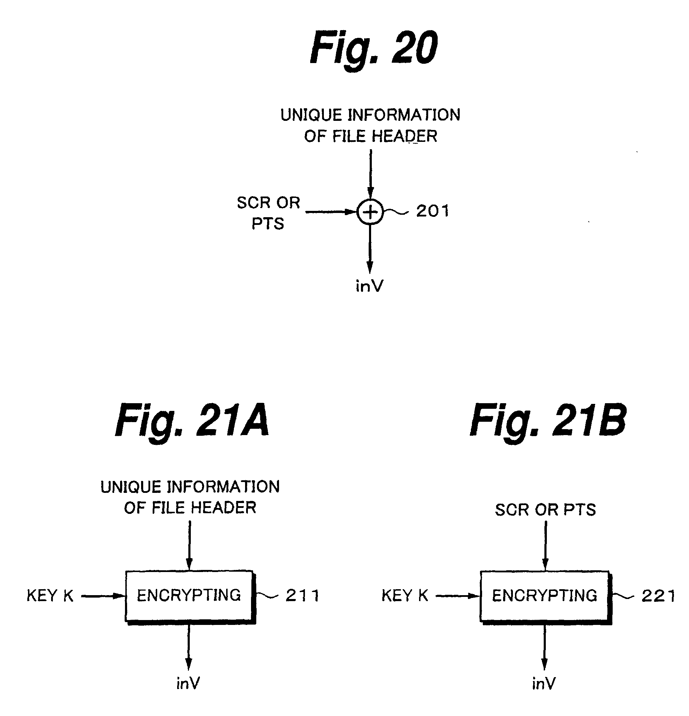

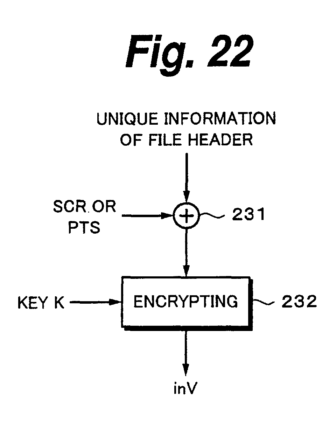

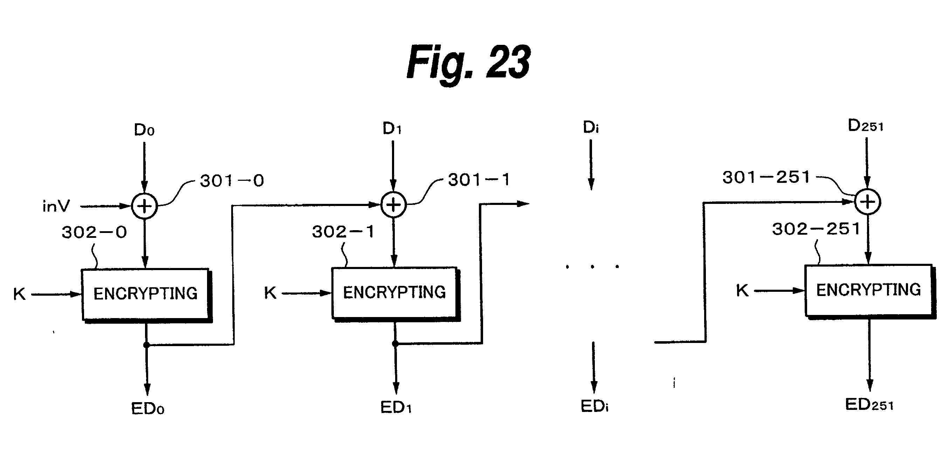

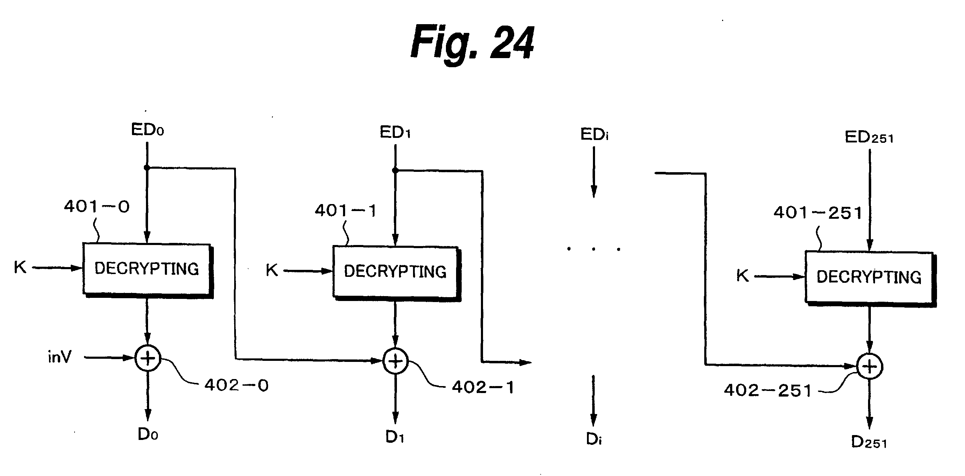

Fig. 1 is a schematic diagram showing an example of an optical disc according to the present invention; Fig. 2 is a block diagram showing an example of a recording apparatus according to the present invention; Fig. 3 is a block diagram showing an example of a reproducing apparatus according to the present invention; Fig. 4 is a schematic diagram showing the structure of a sector; Fig. 5 is a schematic diagram showing the structure of blocks; Fig. 6 is a block diagram for explaining an encrypting process according to the present invention; Fig. 7 is a block diagram for explaining the encrypting process according to the present invention; Fig. 8 is a block diagram for explaining a decrypting process according to the present invention; Fig. 9 is a block diagram for explaining a decrypting process according to the present invention; Figs. 10, 11, 12, 13, 14, 15, and 16 are flow charts for explaining the encrypting process according to the present invention; Fig. 17 is a schematic diagram for explaining the case that an MPEG stream is recorded; Fig. 18 is a schematic diagram for explaining the case that an MPEG stream is recorded; Fig. 19 is a schematic diagram showing a block structure in the case that an MPEG stream is recorded; Fig. 20 is a block diagram for explaining an encrypting process according to the present invention; Figs. 21A and 21B are block diagrams for explaining an encrypting process according to the present invention; Fig. 22 is a block diagram for explaining an encrypting process according to the present invention; Fig. 23 is a block diagram for explaining an encrypting process according to the present invention; Fig. 24 is a block diagram for explaining a decrypting process according to the present invention; Fig. 25 is a block diagram for explaining a conventional encrypting process; and Fig. 26 is a block diagram for explaining a conventional encrypting process.

### Best Modes for Carrying out the Invention

Next, with reference to the accompanying drawings, an embodiment of the present invention will be described. The present invention is suitable for encrypting data of a content so as to protect the data when it is recorded to and reproduced from for example a CD (Compact Disc) 2.

Fig. 1 shows an external structure of a CD2 according to the present invention. As with a conventional CD, the CD2 is an optical disc having a diameter of for example 120 mm. However, as with a so-called single CD, the diameter of the CD2 may be 80 mm.

The CD2 has been designated to have an affinity with both a conventional CD player and a personal computer. As shown in Fig. 1, the CD2 has a center hole. On the inner periphery side, an area AR1 is formed. On an outer periphery of the area AR1, an area AR2 is formed. A mirror portion M1 is formed between the inner periphery area AR1 and the outer periphery area AR2. The mirror portion M1 separates the inner periphery area AR1 from the outer periphery area AR2. On the innermost periphery of the inner periphery area AR1, a lead-in area LIN1 is formed. On the outermost periphery, a lead-out area LOUT1 is formed. On the innermost periphery of the outermost periphery area AR2, a lead-in area LIN2 is formed. On the outer periphery of the outer periphery area AR2, a lead-out area LOUT2 is formed.

The inner periphery area AR1 is an area that has an affinity with a conventional CD player. In the area AR1, for example audio data is recorded in the same format as the conventional CD-DA (CD Digital Audio) so that the data can be reproduced by a conventional CD player. In addition, data recorded in the inner periphery area AR1 is not encrypted so that the data can be treated in the same manner as the regular CD-DA. Of course, to protect the copyright of data recorded in the inner periphery area AR1, the data may be encrypted. In addition, in the inner periphery area AR1, non-audio data for example video data or computer program data may be recorded. In addition, compressed data of a content may be recorded in the inner periphery area AR1.

In contrast, the outer periphery area AR2 is an area that has an affinity with a personal computer. In the outer periphery area AR2, data can be recorded in double density. In the area AR2, compressed audio data is recorded. The compressing system is for example MP3 (MPEG-1 Audio Layer-3) system. In addition, to allow the outer periphery area AR2 to have an affinity with a personal computer, data is recorded as a file in the outer periphery area AR2.

The MP3 system is one of three layer compressing systems prescribed in MPEG1. Outputs of individual bands are divided on the frequency axis corresponding to MDCT (Modified Discrete Cosine Transform), quantized, and then Huffman-encoded. When audio data is compressed corresponding to the MP3 system, the record capacity can be increased. In addition, data can be handled as a file of a personal computer. Thus, data of a content recorded as a file in the outer periphery area AR2 corresponding to the MP3 system can be moved to a hard disk of a personal computer so that a music server is formed in the personal computer. Alternatively, data of a content recorded as a file in the outer periphery area AR2 may be moved to a flash memory of a portable MP3 reproducing player so that the user can reproduce and enjoy songs outdoors.

In such a manner, data of a content recorded in the outer periphery area AR2 has a affinity with a personal computer. Thus, data of a content recorded in the outer periphery area AR2 can be easily handled. However, data of a content recorded in the outer periphery area AR2 is often moved to the outside. Thus, there is a possibility of which the copyright of such data may not be protected. Thus, to restrict the copying operation and the reproducing operation of data of a content recorded in the outer periphery area AR2, the data is encrypted. In addition, copyright management information that represents copy prohibition/permission, copy generation management, restriction of number of times of coping operation, reproduction prohibition/permission, restriction of number of times of reproducing operation, and restriction of reproduction time period is recorded in the outer periphery area AR2.

In this example, data recorded in the area AR2 is treated as a file corresponding to the MP3 system. Of course, data of a content recorded in the area AR2 is not limited to a file corresponding to the MP3 system. Other examples of the compressing system of audio data are MPEG2-AAC (Advanced Audio Coding) and ATRAC (Adaptive TRansform Acoustic Coding) 3. Besides audio data, various types of data such as video data, still picture data, text data, and computer programs can be recorded to the area AR2. In addition, when not necessary, data of a content recorded to the area AR2 may not be encrypted.

In such a manner, in the CD2, using the inner periphery area AR1, data can be reproduced with a CD player in the same manner as the conventional CD. In addition, using the outer periphery area AR2, data can be handled in association with both a personal computer and a portable player.

The present invention is suitable for the case that data of a content that is encrypted is recorded to the outer periphery area AR2 of such a CD2 and reproduced therefrom.

Fig. 2 shows an example of a recording apparatus according to the present invention. In Fig. 2, content data is supplied to an input terminal 1. The content data is for example PCM data or an MP3 stream. Alternatively, various types of data such as moving picture data, still picture data, game program data, web page data, and text may be recorded as content data. The content data is supplied from the input terminal 1 to an encrypting circuit 4.

In addition, key information K is supplied to an input terminal 2. The key information K supplied from the input terminal 2 is supplied to the encrypting circuit 4.

The encrypting circuit 4 encrypts the content data supplied from the input terminal 1 using the key information K supplied from the input terminal 2. The encrypting system is for example block encrypting system. In the block encrypting system, data is encrypted in the unit of for example eight bytes. The encrypting circuit 4 has a block segmenting circuit. In the example, data that is encrypted in the unit of a block is chained so as to improve the encrypting strength. The encrypting system of which data that has been encrypted in the unit of a block is chained is known as CBC (Ciphering Block Chaining) system.

An output of the encrypting circuit 4 is supplied to an error correction code encoding circuit 5. The error correction code encoding circuit 5 adds an error correction code to the content data that has been encrypted by the encrypting circuit 4.

An output of the error correction code encoding circuit 5 is supplied to a modulating circuit 6. The modulating circuit 6 modulates record data corresponding to a predetermined modulating system. An output of the modulating circuit 6 is supplied to a recording circuit 7.

An output of the recording circuit 7 is supplied to an optical pickup 8. The recording circuit 7 is controlled by a system controller 13. Data is recorded to an optical disc 10 by the optical pickup 8. The optical disc 10 is for example a CD2 disc.

The optical pickup 8 can be moved in the radius direction of the optical disc 10. In addition, various types of servo circuits are disposed (not shown). They are a tracking servo circuit, a focus servo circuit, a spindle servo circuit, and so forth. The tracking servo circuit causes laser light of the optical pickup 8 to be radiated along a track of the optical disc 10. The focus servo circuit causes a spot of the laser light of the optical pickup 8 to be focused on the optical disc 10. The spindle servo circuit controls the rotation of the optical disc 10.

The key information K that is supplied from the input terminal 2 is supplied to a mixing circuit 9. Copyright management information R is supplied to an input terminal 3. The copyright management information R is supplied to the mixing circuit 9 through a rewriting circuit 11. An output of the mixing circuit 9 is supplied to the optical pickup 8 through a recording circuit 12. The optical pickup 8 records the key information K and the copyright management information R to the optical disc 10 through the recording circuit 12.

The copyright management information R is information that represents copy prohibition/permission, copy generation management, restriction of number of times of coping operation, reproduction prohibition/permission, restriction of number of times of reproducing operation, and restriction of reproduction time period. When the copy generation is managed, the number of times of coping operation is restricted, the number of times of reproducing operation is restricted, or the reproduction time period is restricted, whenever the coping operation or the reproducing operation is performed, it is necessary to rewrite the copyright management information R. The copyright management information R is rewritten by the rewriting circuit 11.

It can be considered that the key information K and the copyright management information R are recorded in a lead-in area or a lead-out area of the optical disc 10 or recorded as wobbled data in the radius direction of a track.

Fig. 3 shows the structure of a reproducing system. In Fig. 3, a record signal of an optical disc 20 is reproduced by an optical pickup 22. The optical disc 20 corresponds to the optical disc 10 shown in Fig. 2. The optical disc 20 is for example a CD2. An output of the optical pickup 22 is supplied to a demodulating circuit 24 through a reproducing amplifier 23. The operation of the optical pickup 22 is controlled by an access controlling circuit 30 under the control of a system controller 29. The access controlling circuit 30 is composed of servo circuits that are an optical pickup moving mechanism, a tracking servo circuit, and a focus servo circuit. The tracking servo circuit causes laser light of the optical pickup 22 to be radiated along a track of the optical disc 20. The focus servo circuit causes a spot of laser light of the input terminal 2 to be focused on the optical disc 20.

An output of the demodulating circuit 24 is supplied to an error correcting circuit 25. The error correcting circuit 25 performs an error correcting process for a signal that is supplied from the demodulating circuit 24. An output of the error correcting circuit 25 is supplied to a decrypting circuit 26. In addition, the output of the error correcting circuit 25 is supplied to a key management information reading circuit 27. An output of the key management information reading circuit 27 is supplied to the decrypting circuit 26.

The decrypting circuit 26 performs a decrypting process for the reproduced data using the key information K that is read by the key management information reading circuit 27. As was described above, in the example, as the encrypting system, the CBC system is used. The decrypting circuit 26 performs a decrypting process for data that has been encrypted corresponding to the CBC system.

An output of the decrypting circuit 26 is supplied to a reproducing circuit 28. An output of the reproducing circuit 28 is output from an output terminal 31. Using the copyright management information R that is read by the key management information reading circuit 27, the copying operation and the reproducing operation are restricted.

As was described above, in the example, as the encrypting system, the CBC system is used. In other words, in the recording system, the encrypting circuit 4 performs an encrypting process for the input content data corresponding to the CBC system. In the reproducing system, the decrypting circuit 26 performs a decrypting process for the reproduced content data.

The block encrypting system may be DES, AES, FEAL, or MISTY.

In the CBC system, encrypted data is chained in the unit of a block so as to improve the encrypting strength. In the example, as shown in Fig. 4, 2048 bytes are defined as one sector. In the unit of a sector, data is recorded to and reproduced from the optical disc 10 (20).

In other words, in a CD, a sub code block composed of 98 frames is defined as one sector. The size of the area of one sector is 2352 bytes. 2048 bytes of the 2352 bytes are used as a data area.

When data is encrypted corresponding to the DES system, 64 bits are processed as one block. A key of 56 bits is used. Thus, as shown in Fig. 5, one sector is divided into 256 blocks in the unit of eight bytes (64 bits).

In each sector, each block is chained with the immediately preceding block so as to perform an encrypting process corresponding to the CBC system.

In other words, in the CBC system, the current block data and data of which the immediately preceding block data has been encrypted are ex-ORed. The resultant data is encrypted. After one sector has been encrypted corresponding to the CBC system, the next sector is encrypted corresponding to the CBC system in the same manner.

Thus, in the example, corresponding to the CBC system, the encrypting strength is improved. In each sector, the encrypting process is performed corresponding to the CBC system. Thus, even if data cannot be reproduced due to an occurrence of an error, the influence does not adversely affect the other sectors.

According to the embodiment of the present invention, as an initial value, data of a block of the same sector is used. Since data of a block of the same sector is used as an initial value, there is no loss in the data area. When content data is music data or video data, the value itself varies at random. Thus, when content data is used, the secrecy of the initial value becomes high.

When data of a block of the same sector is used as an initial value, the data itself does not have a high secrecy. Thus, it can be considered that encrypted data of a block of the same sector is used as an initial value. In addition, in the example, data of one block of the same sector and data of another block of the same sector are ex-ORed. The resultant data is encrypted and used as an initial value.

Next, with reference to Figs. 6 and 7, the encrypting process will be described. Fig. 6 shows a process for generating an initial value. Fig. 7 shows a process for performing a chain-block-encrypting process.

When an encrypting process is performed, as shown in Fig. 6, an initial value is generated.

In other words, as shown in Fig. 6, one block data Dj of block data D0 to D255 of one sector is supplied to an ex-OR gate 101. In addition, a function f (Di) of one block data Di that is not the block data Dj of the same sector is supplied to the ex-OR gate 101.

The ex-OR gate 101 ex-ORes the block data Dj and the function f (Di) of the block data Di that is not the block data Dj.

In this case, a plurality of block data Di that are not the block data Dj may be used. Thus, a plurality of functions f (Di) may be used. In addition, the function(s) f (Di) may be any function(s).

An output of the ex-OR gate 101 is supplied to a block encrypting circuit 102. The block encrypting circuit 102 encrypts the output of the ex-OR gate 101 using key information K. As a result, an initial value inV is obtained. This value is also used as data EDj of which the block data Dj is encrypted.

After the initial value has been obtained, as shown in Fig. 7, using the initial value, the current block data and data of which the immediately preceding block data has been encrypted are ex-ORed. The resultant data is encrypted. When the current block data is Dj, the data EDj that is an initial value is used as encrypted block data.

In other words, when input block data Dj used as an initial value is one of (j = 1 to 254), the input block data Dj is encrypted in the following manner.

First of all, an ex-OR gate 111 ex-ORes input block data D0 and the initial value inV obtained in the process shown in Fig. 6. An output of the ex-OR gate 111 is supplied to a block encrypting circuit 112.

The block encrypting circuit 112 obtains encrypted block data ED0 using the output of the ex-OR gate 111 and the key information K.

Thereafter, the ex-OR gate 111 ex-ORes input block data D1 and the encrypted block data ED0. An output of the ex-OR gate 111 is supplied to the block encrypting circuit 112. The block encrypting circuit 112 obtains encrypted block data ED1 using the output of the ex-OR gate 111 and the key information K.

In the same manner, using input data D2, D3, ..., and so forth, encrypted block data ED2, ED3, ... and so forth are obtained.

The input block data D2, D3, ..., and so forth are encrypted. When the input block data becomes Dj, the initial value inV obtained in the process shown in Fig. 6 is output as the encrypted block data EDj.

Thereafter, the ex-OR gate 111 ex-ORes the input block data Di and the encrypted block data EDi-1. An output of the ex-OR gate 111 is supplied to the block encrypting circuit 112. The block encrypting circuit 112 obtains the encrypted block data EDi using the output of the ex-OR gate 111 and the key information K.

Until the input block data D255 is encrypted and thereby the encrypted block data ED255 is output, the same process is repeated.

When the input block data Dj that is input as the initial value is the first block data (j = 0), the encrypting process is performed in the following manner.

First of all, the initial value inV obtained in the process shown in Fig. 6 is output as the encrypted block data ED0.

Thereafter, the ex-OR gate 111 shown in Fig. 7 ex-ORes the input block data D1 and the encrypted block data ED0 (equal to the initial value InV). An output of the ex-OR gate 111 is supplied to the block encrypting circuit 112. The block encrypting circuit 112 obtains the encrypted block data ED1 using the output of the ex-OR gate 111 and the key information K.

Until the input data D255 is encrypted and thereby the encrypted block data ED255 is output, the same process is repeated. Using the input data D2, D3, ..., and so forth, the encrypted block data ED2, ED3, ..., and so forth are obtained.

When the input block data Dj used as the initial value is the last block data (j = 255), the encrypting process is performed in the following manner.

First of all, the ex-OR gate 111 shown in Fig. 7 ex-ORes the input block data D0 and the initial value inV obtained in the process shown in Fig. 6. An output of the ex-OR gate 111 is supplied to the block encrypting circuit 112.

The block encrypting circuit 112 obtains the encrypted block data ED0 using the output of the ex-OR gate 111 and the key information K.

Thereafter, the ex-OR gate 111 ex-ORes the input block data D1 and the encrypted block data ED0. An output of the ex-OR gate 111 is supplied to the block encrypting circuit 112. The block encrypting circuit 112 obtains the encrypted block data ED1 using the output of the ex-OR gate 111 and the key information K.

Thereafter, in the same manner, using the input data D2, D3, ..., and so forth, the encrypted block data ED2, ED3, ..., and so forth are obtained. Until the encrypted block data ED254 of the input data D254 is obtained, the same process is repeated.

When the current block data becomes the last block data D255, the initial value inV obtained in the process shown in Fig. 6 is output as the encrypted block data ED255.

Next, with reference to Figs. 8 and 9, a decrypting process will be described. Fig. 8 shows a process for performing a chain-block-encrypting process. Fig. 9 shows a process for decrypting block data of which an initial value has been encrypted.

When input block data Dj that is used as an initial value is one of (j = 1 to 254), the decrypting process is performed in the following manner.

First of all, as shown in Fig. 8, encrypted block data ED0 and key information K are supplied to an encrypted block decrypting circuit 121. The encrypted block decrypting circuit 121 performs a decrypting process using the encrypted block data ED0 and the key information K.

An output of the encrypted block decrypting circuit 121 is supplied to an ex-OR gate 122. In addition, an initial value inV is supplied to the ex-OR gate 122. The initial value inV is encrypted block data EDj.

The ex-OR gate 122 ex-ORes the output of the encrypted block decrypting circuit 121 and the encrypted block data EDj and obtains block data D0.

Thereafter, encrypted block data ED1 and the key information K are supplied to the encrypted block decrypting circuit 121. The encrypted block decrypting circuit 121 performs the decrypting process using the encrypted block data ED1 using the key information K. An output of the encrypted block decrypting circuit 121 is supplied to the ex-OR gate 122.

In addition, the immediately preceding encrypted block data ED0 is supplied to the ex-OR gate 122.

The ex-OR gate 122 ex-ORes the output of the encrypted block decrypting circuit 121 and the immediately preceding encrypted block data ED0 and obtains block data D1.

Thereafter, in the same manner, using the encrypted block data ED1, ED2, ..., and so forth, the block data D1, D2, ..., and so forth are obtained.

While the block data D2, D3, ..., and so forth are obtained, when the block data to be decrypted becomes the encrypted block data EDj that is the same as the initial value, as shown in Fig. 9, the encrypted block data EDj and the key information K are supplied to an encrypted block decrypting circuit 131. The encrypted block decrypting circuit 131 performs the decrypting process using the encrypted block data EDj and the key information K.

An output of the encrypted block decrypting circuit 131 is supplied to an ex-OR gate 132. In addition, a function f (Di) of data that is not the block data Dj is supplied to the ex-OR gate 132.

The ex-OR gate 132 ex-ORes the output of the encrypted block decrypting circuit 131 and the function f (Di) of data that is not the block data Dj and obtains block data Dj.

After the block data Dj has been obtained, returning to the process shown in Fig. 8, the encrypted block data EDi and the key information K are supplied to the encrypted block decrypting circuit 121. The encrypted block decrypting circuit 121 performs the decrypting process using the encrypted block data EDi and the key information K. An output of the encrypted block decrypting circuit 121 is supplied to the ex-OR gate 122. In addition, the immediately preceding encrypted block data EDi-1 is supplied to the ex-OR gate 122. The ex-OR gate 122 ex-ORes the output of the encrypted block decrypting circuit 121 and the immediately preceding encrypted block data EDi-1 and obtains block data Di.

Thereafter, until the encrypted block data ED255 is decrypted, the same process is repeated.

When the input block data Dj used as the initial value is the first block data (j = 0), the decrypting process is performed in the following manner.

First of all, as shown in Fig. 9, the encrypted block data ED0 and the key information K are supplied to the encrypted block decrypting circuit 131. The encrypted block decrypting circuit 131 performs the decrypting process using the encrypted block data ED0 and the key information K.

An output of the encrypted block decrypting circuit 131 is supplied to the ex-OR gate 132. In addition, a function f (Di) of data that is not the block data D0 is supplied to the ex-OR gate 132.

The ex-OR gate 132 ex-ORes the output of the encrypted block decrypting circuit 131 and the function f (Di) of data that is not the block data Dj and obtains the block data D0.

After the block data D0 has been obtained, as shown in Fig. 8, the encrypted block data ED1 and the key information K are supplied to the encrypted block decrypting circuit 121. The encrypted block decrypting circuit 121 performs the decrypting process using the encrypted block data ED1 and the key information K.

An output of the encrypted block decrypting circuit 121 is supplied to the ex-OR gate 122. In addition, the initial value inV is supplied to the ex-OR gate 122. The initial value inV is encrypted block data ED0.

The ex-OR gate 122 ex-ORes the output of the encrypted block decrypting circuit 121 and the encrypted block data ED0 and obtains the block data D1.

Thereafter, the encrypted block data ED2 and the key information K are supplied to the encrypted block decrypting circuit 121. The encrypted block decrypting circuit 121 performs the decrypting process using the encrypted block data ED2 and the key information K.

An output of the encrypted block decrypting circuit 121 is supplied to the ex-OR gate 122. In addition, the immediately preceding encrypted block data ED1 is supplied to the ex-OR gate 122.

The ex-OR gate 122 ex-ORes the output of the encrypted block decrypting circuit 121 and the immediately preceding encrypted block data ED1 and obtains block data D2.

Thereafter, until the encrypted block data ED255 is decrypted, the same process is repeated.

When the input block data used as the initial value is the last block data (j = 255), the decrypting process is performed in the following manner.

First of all, as shown in Fig. 8, encrypted block data ED0 and key information K are supplied to the encrypted block decrypting circuit 121. The encrypted block decrypting circuit 121 performs the decrypting process using the encrypted block data ED0 and the key information K.

An output of the encrypted block decrypting circuit 121 is supplied to the ex-OR gate 122. In addition, an initial value inV is supplied to the ex-OR gate 122. The initial value inV is encrypted block data ED255.

The ex-OR gate 122 ex-ORes the output of the encrypted block decrypting circuit 121 and the encrypted block data ED255 and obtains block data D0.

Thereafter, the encrypted block data ED1 and the key information K are supplied to the encrypted block decrypting circuit 121. The encrypted block decrypting circuit 121 performs the decrypting process using the encrypted block data ED1 and the key information K. An output of the encrypted block decrypting circuit 121 is supplied to the ex-OR gate 122.

In addition, the immediately preceding encrypted block data ED0 is supplied to the ex-OR gate 122.

The ex-OR gate 122 ex-ORes the output of the encrypted block decrypting circuit 121 and the immediately preceding encrypted block data ED0 and obtains block data D1.

Thereafter, in the same manner, using the encrypted block data ED2, ED3, ..., and so forth, block data D2, D3, ..., and so forth are obtained.

After the encrypted block data ED254 has been decrypted and thereby block data D254 has been obtained, as shown in Fig. 9, the encrypted block data ED255 and the key information K are supplied to the encrypted block decrypting circuit 121. The encrypted block decrypting circuit 131 performs the decrypting process using the encrypted block data ED255 and the key information K.

An output of the encrypted block decrypting circuit 131 is supplied to the ex-OR gate 132. In addition, a function f (Di) of data that is not the block data Dj is supplied to the ex-OR gate 132.

The ex-OR gate 132 ex-ORes the output of the encrypted block decrypting circuit 131 and a function f (Di) of data that is not the block data Dj and obtains block data D255.

In the forgoing example, the chain, initial value, and key information are processed with 64 bits each. However, they may be processed with 128 bits each or 256 bits each.

Figs. 10 to 12 are flow charts showing a process for encrypting data and recording the encrypted data. In the process, one sector composed of for example 2048 bytes is encrypted corresponding to the CBC system. One sector is divided into 256 blocks each of which is composed of eight bytes (64 bits).

In Fig. 10, block data Dj of block data D0 to D255 of one sector (for example, 2048 bytes) is read (at step S1). The block data Dj and a function f (Di) of the block data Di are ex-ORed. The resultant data is encrypted using key information K. As a result, an initial value inV is generated (at step S2). The initial value inV is stored (at step S3).

It is determined whether or not the block data Dj used to generate the initial value is the first block data (j = 0) (at step S4).

When the block data Dj is the first block data (j = 0), the initial value inV is read (at step S5). The initial value inV is treated as the encrypted block data ED0 of the block data D0 (at step S6). The obtained encrypted block data ED0 is stored (at step S7).

The number i of the block data is initialized to "1" (i = 1) (at step S8). The initial value inV is read (the initial value inV is the same as the encrypted block data D0) (at step S9). The block data D1 is read (at step S10). The initial value inV and the block data D1 are ex-ORed. The resultant data is encrypted using the key information K. As a result, the encrypted block data ED1 of the block data D1 is generated (at step S11). The encrypted block data EDi is stored (at step S12). The number i of the block data is incremented to "2" (i = 2) (at step S13).

After the number i of the block data has been incremented, the encrypted block data EDi-1 is read (at step S14). Thereafter, the block data Di is read (at step S15). The encrypted block data EDi-1 and the block data Di are ex-ORed. The resultant data is encrypted using the key information K. As a result, the encrypted block data EDi of the block data Di is generated (at step S16). The encrypted block data EDi is stored (at step S17). The number i of the block data is incremented (at step S18).

It is determined whether or not the block number i is "256" (at step S19). When the block number is not "256", the flow returns to step S14. Until the block number i becomes "256", the same process is repeated. As a result, the encrypted block data EDi is obtained. When the block number i becomes "256" and the block data D255 has been processed, the process is completed.

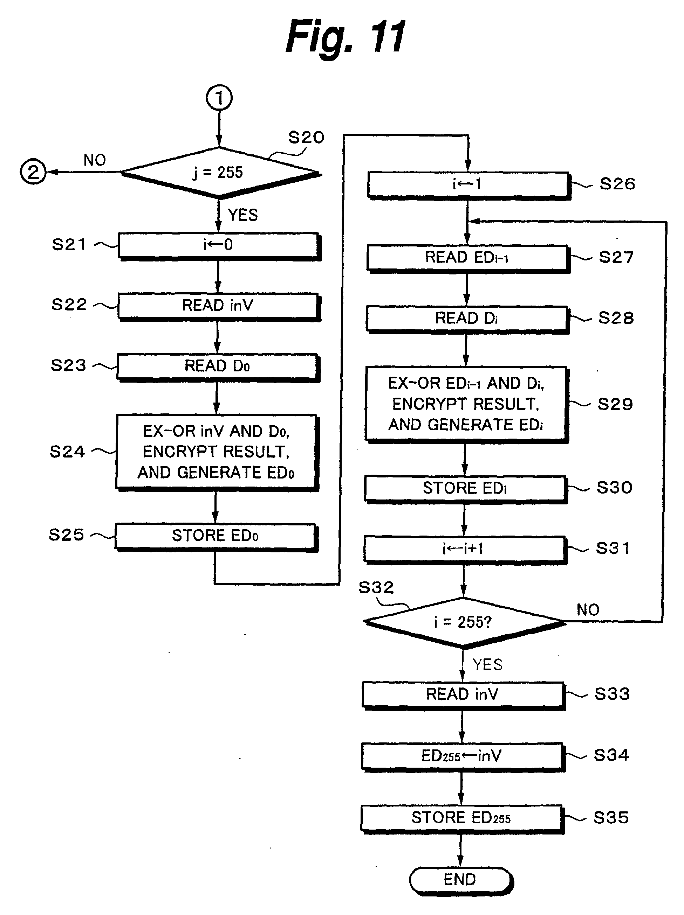

When the block data Dj used to generate the initial value is not the first block data (j = 0) at step S4, as shown-in Fig. 11, it is determined whether or not the block data Dj used to generate the initial value is the last block data (j = 255) (at step S20).

When the block number is "255" (j = 255), the block number is initialized to "0" (i = 0) (at step S21). The initial value inV obtained at step S2 is read (at step S22). As a result, the block data D0 is read (at step S23). The initial value inV and the block data D0 are ex-ORed. The resultant data is encrypted using the key information K. As a result, the encrypted block data ED0 of the block data D0 is generated (at step S24). The encrypted block data ED0 is stored (at step S25). The number i of the block data is incremented to "1" (i = 1) (at step S26).

After the number i of the block data has been incremented, the encrypted block data EDi-1 is read (at step S27). Thereafter, the block data Di is read (at step S28). The encrypted block data EDi-1 and the block data Di are ex-ORed. The resultant data is encrypted using the key information K. As a result, the encrypted block data EDi of the block data Di is generated (at step S29). The encrypted block data EDi is stored (at step S30). Thereafter, the number i of the block data is incremented (at step S31).

It is determined whether or not the block number i is "255" (at step S32). When the block number i is not "255", the flow returns to step S27. Until the block number i becomes "255", the same process is repeated. As a result, the encrypted block data EDi is obtained.

When the block number is "255", the initial value inV obtained at step S2 is read (at step S33). The initial value inV is treated as the encrypted block data ED255 (at step S34). The encrypted block data ED255 is stored (at step S35). Thereafter, the process is completed.

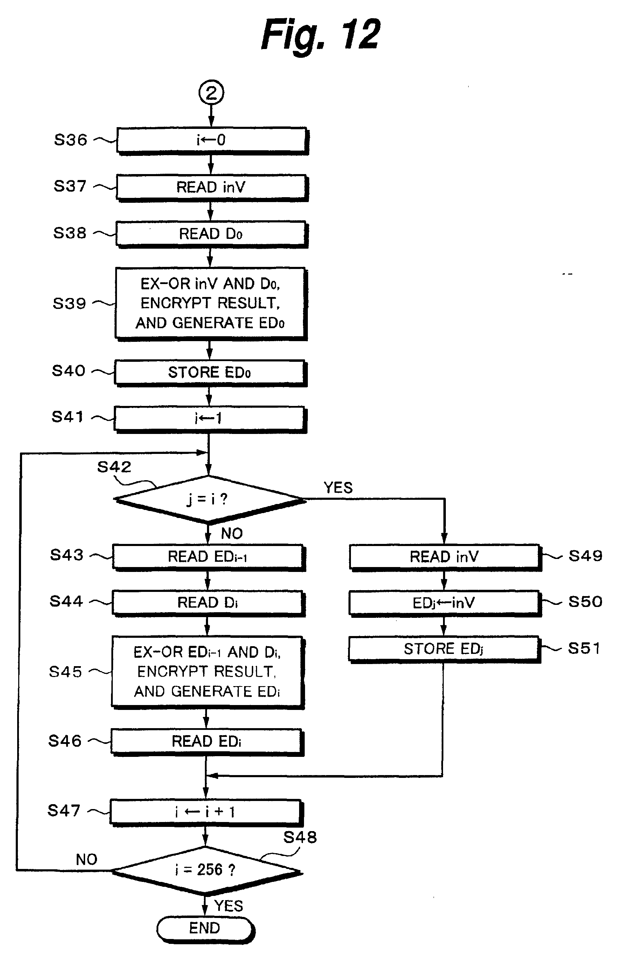

When the determined result represents that the block data Dj used to generate the initial value at step S4 is not the first block data (j = 0) and that the block data Dj is not the last block data (j = 255) at step S20, as shown in Fig. 12, the number i of the block data is initialized to "0" (i = 0) (at step S36). The initial value inV obtained at step S2 is read (at step S37). Thereafter, the block data D0 is read (at step S38). The initial value inV and the block data D0 are ex-ORed. The resultant data is encrypted using the key information K. As a result, the encrypted block data ED0 of the block data D0 is generated (at step S39). The encrypted block data ED0 is stored (at step S40). The number i of the block data is incremented to "1" (i = 1) (at step S41).

After the number i of the block data has been incremented, it is determined whether or not the current block number i is the number j used to generate the initial value (j = i) (at step S42). When the number i of the block data is not the number j (j ≠ i), the encrypted block data EDi-1 is read (at step S43). The block data Di is read (at step S44). The encrypted block data EDi-1 and the block data Di are ex-ORed. The resultant data is encrypted using the key information K. As a result, the encrypted block data EDi of the block data Di is generated (at step S45). The encrypted block data EDi is stored (at step S46). Thereafter, the number i of the block data is incremented (at step S47).

It is determined whether or not the block number i is "256" (at step S48). When the block number i is not "256", the flow returns to step S42.

When the determined result at step S42 represents that the block number i is the number j (j = i), the initial value inV obtained at step S2 is read (at step S49). The initial value inV is treated as the encrypted block data EDj of the block data Dj (at step S50). The encrypted block data EDj is stored (at step S51). Thereafter, the flow advances to step S47.

Until the block number i becomes "256", the same process is repeated. After the block number i becomes "256" and the encrypted block data of the block data D255 has been obtained, the process is completed.

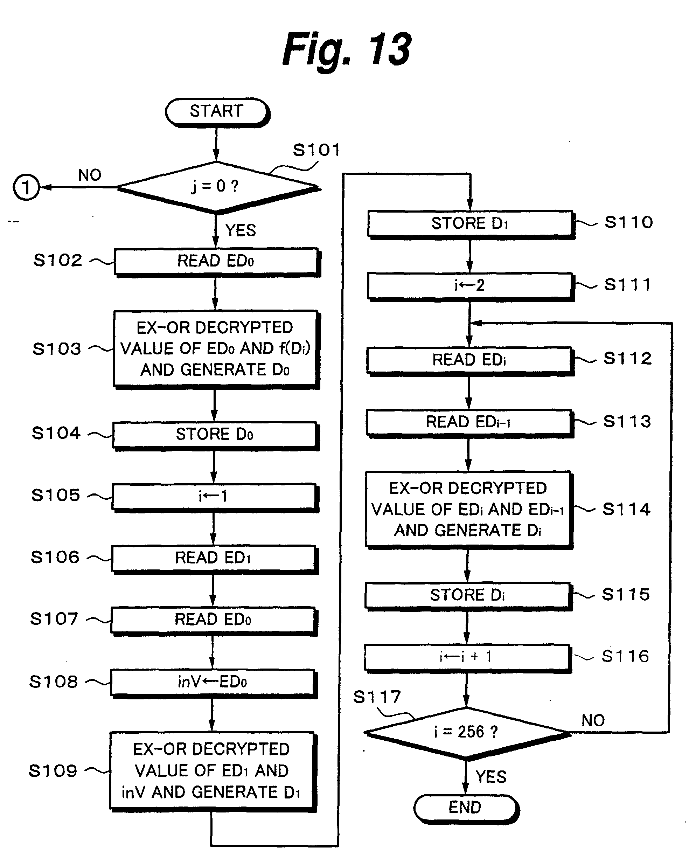

Thereafter, a decrypting process will be described. Figs. 13 to 16 are flow charts showing a decrypting process.

In Figs. 13 to 16, it is determined whether or not a block number j used as an initial value is 0 (j = 0) (at step S101).

When the block number j is 0 (j = 0), the encrypted block data ED0 is read (at step S102). The encrypted block data ED0 is decrypted using key information K. The decrypted value and a function f(Di) are ex-ORed. As a result, the block data D0 is generated (at step S103). The block data D0 is stored (at step S104).

The block number i is initialized to "1" (i = 1) (at step S105). Thereafter, the encrypted block data ED1 is read (at step S106). Thereafter, the encrypted block data ED0 is read (at step S107). The encrypted block data ED0 is treated as the initial value inV (at step S108).

The encrypted block data ED1 is decrypted using the key information K. The decrypted value and the initial value inV (that is the same as the encrypted block data ED0) are ex-ORed. As a result, the block data D1 is generated (at step S109). The generated block data D1 is stored (at step S110). Thereafter, the block number i is incremented to "2" (i = 2) (at step Sill).

Thereafter, the encrypted block data EDi is read (at step S112). Thereafter, the encrypted block data EDi-1 is read (at step S113). The encrypted block data EDi is decrypted using the key information K. The decrypted value and the encrypted block data EDi-1 are ex-ORed. As a result, the block data Di is generated (at step S114). The block data Di is stored (at step S115). Thereafter, the block number i is incremented (at step S116).

It is determined whether or not the block number i is "256" (at step S117). When the block number i is not "256", the flow returns to step S112. Until the block number becomes "256", the same process is repeated. When the block number becomes "256" and the block data D255 has been obtained, the process is completed.

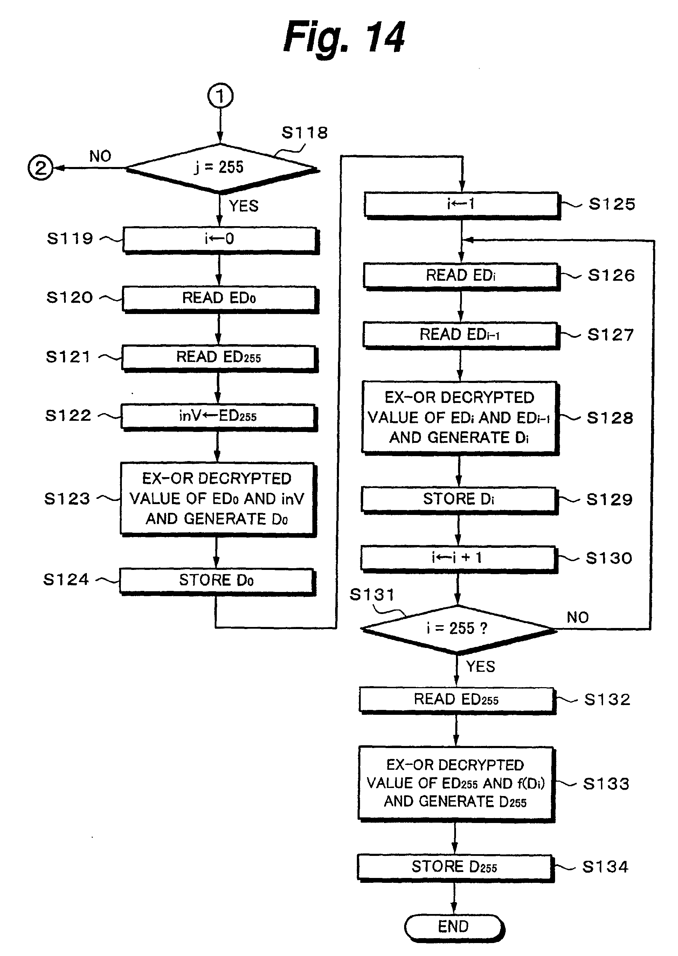

When the determined result at step S101 represents that the block number j used as the initial value is not 0 (j ≠ 0), as shown in Fig. 14, it is determined whether or not the block number j used as the initial value is "255" (j = 255) (at step S118).

When the bock number j is "255" (j = 255), the block number i is initialized to "0" (i = 0) (at step S119). Thereafter, the encrypted block data ED0 is read (at step S120). Thereafter, the encrypted block data ED255 is read (at step S121). The encrypted block data ED255 is treated as the initial value inV (at step S122).

The encrypted block data ED0 is decrypted using the key information K. The decrypted value and the initial value inV are ex-ORed. As a result, the block data D0 is generated (at sep S123). The generated block data D0 is stored (at step S124). Thereafter, the block number i is incremented to "1" (i = 1) (at step S125).

The encrypted block data EDi is read (at step S126). The encrypted block data EDi-1 is read (at step S127). The encrypted block data EDi is decrypted using the key information K. The decrypted value and the encrypted block data EDi-1 are ex-ORed. As a result, the block data Di is generated (at step S128). The block data Di is stored (at step S129). Thereafter, the block number i is incremented (at step S130).

It is determined whether or not the block number i is "255" (at step S131). When the block number i is not "255", the flow returns to step S126. Until the block number i becomes "255", the same process is repeated.

When the block number i is "255" and the block data D254 has been processed, the encrypted block data ED255 is read (at step S132). The encrypted block data ED255 is decrypted using the key information K. The decrypted value and a function f (Di) are ex-ORed. As a result, the block data D255 is generated (at step S133). The block data D255 is stored (at step S134). Thereafter, the process is completed.

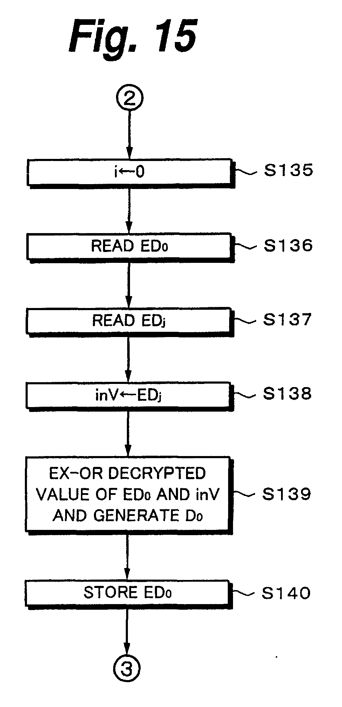

When the determined result at step S101 represents that the block number is not "0" (j ≠ 0) and the determined result at step S118 represents that the block number j is not "255" (j ≠ 255), as shown in Fig. 15, the block number i is initialized to "0" (i = 0) (at step S135).

Thereafter, the encrypted block data ED0 is read (at step S136). Thereafter, the encrypted block data EDj is read (at step S137). The encrypted block data EDj is treated as the initial value inV (at step S138).

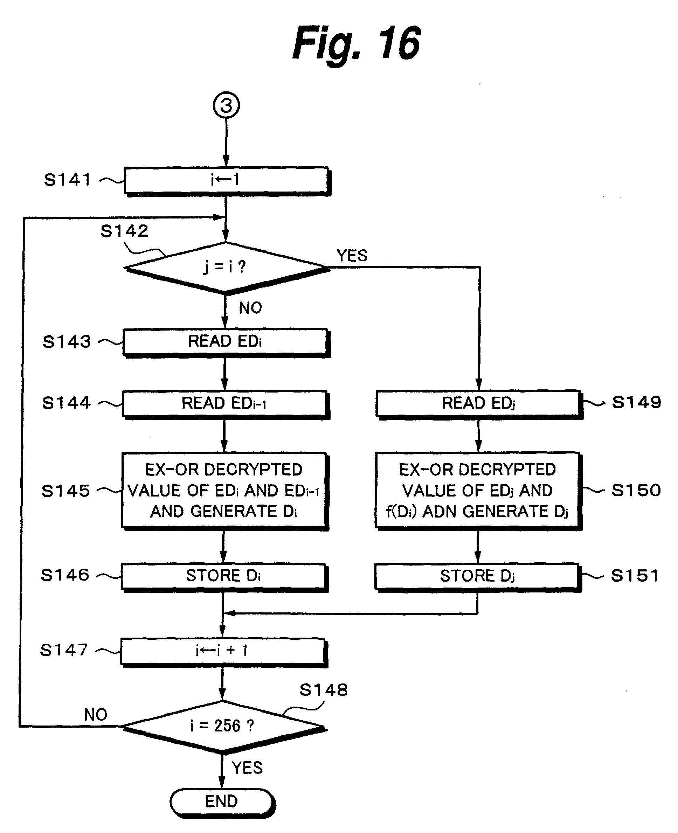

The encrypted block data ED0 is decrypted using the key information K. The decrypted value and the initial value inV are ex-ORed. As a result, the block data D0 is generated (at step S139). The generated block data D0 is stored (at step S140). Thereafter, as shown in Fig. 16, the block number is incremented to "1" (i = 1) (at step S141).

After the number i of the block data has been incremented, it is determined whether or not the current block number i is the number j used to generate the initial value (j = i) (at step S142).

When the number j is not the number i (j ≠ i), the encrypted block data EDi is read (at step S143). Thereafter, the encrypted block data EDi-1 is read (at step S144). The encrypted block data EDi is decrypted using the key information K. The decrypted value and the encrypted block data EDi-1 are ex-ORed. As a result, the block data Di is generated (at step S145). The block data Di is stored (at step S146). Thereafter, the block number i is incremented (at step S147).

It is determined whether or not the block number i is "256" (at step S148). When the block number i is not "256", the flow returns to step S142.

When the determined result at step S142 represents that the block number i is the number j (i = j), the encrypted block data EDj is read (at step S149). The encrypted block data EDj is decrypted using the key information K. The decrypted value and a function f (Di) are ex-ORed. As a result, the block data Dj is generated (at step S150). The block data Dj is stored (at step S151). Thereafter, the flow advances to step S147.

Until the block number becomes "256", the same process is repeated. When the block number becomes "256" and the block data D255 has been obtained, the process is completed.

Block data Dj of which an initial value has been encrypted may be placed at a fixed position. Alternatively, the position of the block data Dj may be varied. When the position of the block data Dj is varied, the secrecy thereof can be improved.

As was described above, according to the present invention, an initial value for which blocks are chain-encrypted is generated using content data. Thus, there is no loss in the data area. In addition, since content data varies at random, the secrecy of the initial value is high.

When content data is music data or the like, it is sampled data. Thus, it can be said that the content data is randomized data. Consequently, it is very difficult to know the level of music data at a particular point. Thus, when the initial value is generated using content data, the secrecy thereof is improved as with the case that a random number is used for the initial value.

Next, the case that an MPEG stream is recorded as content data will be described.

As shown in Fig. 1, the CD2 optical disc has an inner periphery area AR1 and an outer periphery area AR2. In the outer periphery area AR2, audio data as a file corresponding to the MP3 system is recorded. The MP3 system is one of three layers of the audio data used in the MPEG system. Thus, when data corresponding to the MP3 system is recorded in the outer periphery area AR2, data is recorded corresponding to an MPEG stream.

An MPEG stream is composed of an upper layer (program layer and pack layer) and a lower layer (packet layer). In other words, in an MPEG stream, the sequence of one program is composed of a plurality of packs. Regularly, each pack is composed of a plurality of packets. At the beginning of each pack, a pack header is placed. Each packet is composed of a packet header and data.

In a CD, a block composed of 98 frames is referred to as sector. Data is recorded in the unit of a sector.

Fig. 17 shows a data structure of an MPEG steam recorded on the CD. As shown in Fig. 17, one sector of the CD has a data area of 2048 bytes. Normally, packs and packets of the MPEG stream are placed in one sector. As shown in Fig. 18, at the beginning of a file, a file header is placed. At the file header, copyright management information is placed.

As shown in Fig. 17, at the beginning of one sector, a pack header is placed. The pack header is composed of for example 14 bytes. The pack header contains pack start code, SCR (System Clock Reference) and bit rate.

The pack header is followed by a packet header. The packet header is composed of for example 18 bytes. The packet header contains packet start code, stream ID, PES (Packetized Elementary Steam) header length, and PTS (Presentation Time Stamp).

Content date compressed corresponding to the MPEG system (for example, compressed audio data) is placed in the remaining 2016 bytes of one sector.

In such a manner, an MPEG file corresponding to the MP3 system is placed in a stream composed of packs and packets. As shown in Fig. 18, at the beginning of a file, a file header is placed. The file header contains copyright owner management information such as file ID and ISRC (International Standard Recording Code). The ISRC is a 12-digit code that represents master tape of the song or that represents song, company, recorded year, recording number, and so forth assigned when the disc is produced. In addition, a disc ID that identifies the disc may be assigned.

When an MPEG stream is recorded to a CD, data of packs and sectors is recoded to a data area of one sector of 2048 bytes. Data of 2016 bytes of one sector should be encrypted. In other words, it is not necessary to encrypt the pack header of 14 bytes and the packet header of 18 bytes.

Fig. 19 shows the structure of blocks in the case that one sector of an MPEG stream of content data is encrypted. As was described above, 2016 bytes of data of one sector should be encrypted. Thus, when an MPEG stream is encrypted, as shown in Fig. 19, data of one sector is divided into 252 blocks each of which is composed of 8 bytes (64 bits). As was described above, the blocks are encrypted corresponding to the CBC system. In other words, the current block data and data of which the immediately preceding block data has been encrypted are ex-ORed. The resultant data is encrypted.

When content data is encrypted corresponding to the CBC system, an initial value is required. In the forgoing example, the initial value is generated using a block of the same sector of content data. Likewise, in an MPEG stream, an initial value may be generated using a block of the same sector. In contrast, in consideration of the uniqueness of a header of an MPEG stream, an initial value necessary for the encrypting process corresponding to the CBC system may be generated using the header of the MPEG stream.

In other words, as shown in Fig. 17, an MPEG stream contains a pack header and a packet header. As shown in Fig. 18, at the beginning of a file, a file header is placed. It can be considered to generate an initial value using these headers.

For example, copyright management information (such as ISRC) and so forth are recorded at the file header. The copyright management information is a value that is unique for each content. When there is a disc header, a value unique for each disc such as a disc serial number is placed in the disc header. Such information is unique for each disc.

A pack header contains pack start code, SCR, and bit rate. The SCR is time information used for compensating the STC (System Time Clock) as a reference of the system. In contrast, a packet header contains packet start code, stream ID, PES header length, and PTS. The PTS is time information as a reference used for reproducing data. Since the SCR of the pack header and the PTS of the packet header chronologically vary, they are unique values.

Using unique information contained in a header of an MPEG stream, an initial value necessary for encrypting content data corresponding to the CBC system can be generated.

When an initial value used for the encrypting process corresponding to the CBC system is generated using unique information of a header of an MPEG stream, the information of the header may be used as it is. However, when the information of the header is used as it is, the secrecy of the initial value is not sufficient.

Thus, it can be considered that an initial value is generated using information of a header of an MPEG stream. Alternatively, it can be considered that information of a header is encrypted and using the encrypted information, an initial value is generated. In reality, an initial value can be generated in the following manner.

It can be considered that by combining unique information of a file header such as copyright information and information that chronologically varies such as the SCR of a pack header or the PTS of a packet header using a particular function, an initial value is generated.

Fig. 20 shows an example of a process for generating an initial value using unique information of a file header such as copyright information and information that chronologically varies such as the SCR of a pack header or the PTS of a packet header. In Fig. 20, unique information of a file header is supplied to an ex-OR gate 201. The SCR of a pack header or the PTS of a packet header are supplied to the ex-OR gate 201. The ex-OR gate 201 ex-ORes the unique information of the file header and the SCR of the pack header or the PTS of the packet header. Using the output of the ex-OR gate 201, an initial value inV is obtained.

Alternatively, it may be considered that by encrypting unique information of a file header such as copyright information or information that chronologically varies such as the SCR of a pack header or the PTS of a packet header, an initial value is generated.

Fig. 21A shows an example of a process for encrypting unique information of a file header such as copyright information and generating an initial value. In Fig. 21A, unique information of a file header is supplied to an encrypting circuit 211. The encrypting circuit 211 encrypts unique information of the file header. Using an output of the encrypting circuit 211, an initial value inV is obtained.

Fig. 21B shows an example of a process for encrypting information that chronologically varies such as the SCR of a pack header or the PTS of a packet header and generating an initial value. In Fig. 21B, the SCR of the pack header or the PTS of the pack header is supplied to an encrypting circuit 221. The encrypting circuit 221 encrypts the SCR or the PTS. Using an output of the encrypting circuit 221, an initial value inV is obtained

Alternatively, it may be considered that by encrypting unique information of a file header such as copyright information and information that chronologically varies such as the SCR of a pack header or the PTS of a packet header, an initial value is generated.

Fig. 22 shows an example of a process for encrypting unique information of a file header such as copyright information and information that chronologically varies such as the SCR of a pack header or the PTS of a packet header and generating an initial value. In Fig. 22, unique information of a file header is supplied to an ex-OR gate 231. In addition, the SCR of a pack header or the PTS of a packet header is supplied the ex-OR gate 231. The ex-OR gate 231 ex-ORes the unique information of the file header and the SCR of the pack header or the PTS of the packet header. An output of the ex-OR gate 231 is supplied to an encrypting circuit 232. The encrypting circuit 232 encrypts the output of the ex-OR gate 231. Using the output of the encrypting circuit 232, an initial value inV is obtained.

Fig. 23 shows an example of an encrypting process for encrypting an MPEG stream. In Fig. 23, an ex-OR gate 301-0 ex-ORes input block data D0 and an initial value inV obtained from an MPEG header. An output of the ex-OR gate 301-0 is supplied to a block encrypting circuit 302-0.

The block encrypting circuit 302-0 obtains encrypted block data ED0 using the output of an ex-OR gate 311 and key information K.

Thereafter, an ex-OR gate 301-1 ex-ORes input block data D1 and the encrypted block data ED0. An output of the ex-OR gate 301-1 is supplied to a block encrypting circuit 302-1. The block encrypting circuit 302-1 obtains encrypted block data ED1 using the output of the ex-OR gate 301-1 and the key information K.

Likewise, using input data D2, D3, ..., and D251, encrypted block data ED2, ED3, ..., and ED251 are obtained.

Fig. 24 shows an example of a decrypting process for decrypting an MPEG stream. In Fig. 24, encrypted block data ED0 and key information K are supplied to an encrypted block decrypting circuit 401-0. The encrypted block decrypting circuit 401-0 performs the decrypting process using the encrypted block data ED0 and the key information K.

An output of the encrypted block decrypting circuit 401-0 is supplied to an ex-OR gate 402-0. In addition, an initial value inV is supplied to the ex-OR gate 402-0. The initial value inV is encrypted block data inV.

The ex-OR gate 402-0 ex-ORes the output of the encrypted block decrypting circuit 401-0 and the initial value inV. As a result, block data D0 is obtained.

Thereafter, encrypted block data ED1 and the key information K are supplied to an encrypted block decrypting circuit 401-1. The encrypted block decrypting circuit 401-1 performs the decrypting process using the encrypted block data ED1 and the key information K. An output of the encrypted block decrypting circuit 401-1 is supplied to an ex-OR gate 402-1.

The immediately preceding encrypted block data ED0 is supplied to an ex-OR gate 402-1.

The ex-OR gate 402-1 ex-ORes the output of the encrypted block decrypting circuit 401-1 and the immediately preceding encrypted block data ED0. As a result, block data D1 is obtained.

Likewise, using encrypted block data ED1, ED2, ..., and so forth, block data D1, D2, ..., and D251 are obtained.

Thus, when an MPEG stream is recorded, using a header of the MPEG stream, an initial value used to perform an encrypting process corresponding to the CBC system can be generated because header is unique. In the forgoing example, an initial value is generated using a file header and time information such as the SCR of a pack header or the PTS of a packet header. Alternatively, information of a disc header may be used.

In the forgoing example, content data is recorded on a CD2 optical disc. However, the present invention is not limited to a CD2 optical disc. In addition, the present invention can be applied to the case that content data is recorded on a CD-DA, a CD-ROM, a CD-R, or a CD-RW. In addition to optical discs, the present invention can be applied to the case that content data is recorded to various types of record mediums such as a magnetic disc and a flash memory card.

In addition, the present invention is suitable for the case that content data is distributed trough a network.

In other words, in recent years, a service that distributes content data such as music data is distributed through a network has become common. In such a service, to protect the right of content data, it is desired to encrypt it. According to the present invention, an initial value used to chain-encrypt blocks is generated using content data or data of an MPEG stream. Thus, the present invention is also suitable for encrypting content data that is distributed.

According to the present invention, content data is block-segmented and chain-encrypted. An initial value is generated using content data of the sector. Thus, it is not necessary to generate the initial value using a random number or the like. Consequently, there is no loss in the data area. Since content data varies at random, the secrecy of the initial value is high. In addition, since a random number generator is not required, the circuit scale does not increase.

In addition, according to the present invention, an initial value generated using content data is encrypted using other content data. In addition, content data that is used as an initial value can be freely selected. Thus, the secrecy of the initial value is improved.

In addition, according to the present invention, when an MPEG steam is recorded, an initial value is generated using unique information contained in a header of the MPEG stream. The information of the header is unique. The time information such as SCR or PTS chronologically varies. Thus, the secrecy of the initial value is high. In addition, since an initial value used to perform an encrypting process is generated using information of a header of an MPEG stream, the MPEG stream can be transmitted as it is. In addition, it is not necessary to provide a random number generator or the like. Thus, the circuit scale does not increase.

### Industrial Applicability

As descried above, the encrypting apparatus, the encrypting method, the decrypting apparatus, the decrypting method, and the record medium are suitable for encrypting content data and recording the encrypted content data so as to protect the right of the content data when it is recorded to and/or reproduced from an optical disc such as a CD (Compact Disc) 2 optical disc.

## Claims

1. An encrypting apparatus, comprising:
generating means for generating an initial value using data of a first portion of content data; and
encrypting means for encrypting data of a second portion of the content data using the generated initial value, outputting the encrypted data, and chain-encrypting data of portions other than the first portion and the second portion of the content data using the output encrypted data.

2. The encrypting apparatus as set forth in claim 1, further comprising:
dividing means for dividing the content data into blocks each of which is composed of a plurality of bits,
wherein the generating means generates an initial value using data of a first portion of each of the divided blocks.

3. The encrypting apparatus as set forth in claim 2,
wherein the encrypting means encrypts each of the divided blocks corresponding to block encrypting system.

4. The encrypting apparatus as set forth in claim 1,
wherein the initial value is encrypted.

5. The encrypting apparatus as set forth in claim 1,
wherein the data of the first portion of the content data is variable.

6. An encrypting method, comprising the steps of:
generating an initial value using data of a first portion of content data; and
encrypting data of a second portion of the content data using the generated initial value, outputting the encrypted data, and chain-encrypting data of portions other than the first portion and the second portion of the content data using the output encrypted data.

7. The encrypting method as set forth in claim 6, further comprising the step of:
dividing the content data into blocks each of which is composed of a plurality of bits,
wherein the generating step is performed by generating an initial value using data of a first portion of each of the divided blocks.

8. The encrypting method as set forth in claim 7,
wherein the encrypting step is performed by encrypting each of the divided blocks corresponding to block encrypting system.

9. The encrypting method as set forth in claim 6,
wherein the initial value is encrypted.

10. The encrypting method as set forth in claim 6,
wherein the data of the first portion of the content data is variable.

11. A decrypting apparatus, comprising:
decrypting means for decrypting data of a second portion of encrypted content data using an initial value that is data of a first portion of the encrypted content data, outputting the decrypted data, and chain-decrypting data of portions other than the first portion and the second portion using the data of the second portion of the encrypted content data; and
generating means for generating the data of the first portion using the data of the first portion of the encrypted content data.

12. The decrypting apparatus as set forth in claim 11,
wherein the content data has been encrypted in the unit of a block composed of a plurality of bits, and
wherein the decrypting means decrypts the encrypted content data in the unit of a block.

13. The decrypting apparatus as set forth in claim 12,
wherein the generating means generates the data of the first portion using the data of the first portion of the encrypted content data in the unit of a block.

14. The decrypting apparatus as set forth in claim 11,
wherein the initial value has been encrypted, and
wherein the data of the first portion is generated by decrypting the initial value.

15. A decrypting method, comprising the steps of:
decrypting data of a second portion of encrypted content data using an initial value that is data of a first portion of the encrypted content data and outputting the decrypted data;
chain-decrypting data of portions other than the first portion and the second portion using the data of the second portion of the encrypted content data; and
generating the data of the first portion using the data of the first portion of the encrypted content data.

16. The decrypting method as set forth in claim 15,
wherein the content data has been encrypted in the unit of a block composed of a plurality of bits, and
wherein the decrypting step is performed by decrypting the encrypted content data in the unit of a block.

17. The decrypting method as set forth in claim 16,
wherein the generating step is performed by generating the data of the first portion using the data of the first portion of the encrypted content data in the unit of a block.

18. The decrypting method as set forth in claim 15,
wherein the initial value has been encrypted, and
wherein the data of the first portion is generated by decrypting the initial value.

19. A storage medium for storing data encrypted corresponding to an encrypting method, comprising the steps of:
generating an initial value using data of a first portion of content data; and
encrypting data of a second portion of the content data using the generated initial value, outputting the encrypted data, and chain-encrypting data of portions other than the first portion and the second portion of the content data using the output encrypted data.

20. An encrypting apparatus, comprising:
generating means for generating an initial value using data of a predetermined portion of a stream of content data; and
encrypting means for encrypting the content data using the generated initial value, outputting the encrypted data, and chain-encrypting data of other portions of the content data using the output encrypted data.

21. The encrypting apparatus as set forth in claim 20, further comprising:
dividing means for dividing the content data into blocks each of which is composed of a plurality of bits,
wherein the encrypting means encrypts the content data in the unit of a divided block corresponding to block encrypting system.

22. The encrypting apparatus as set forth in claim 20,
wherein the initial value is generated using data contained in a header portion of the stream.

23. The encrypting apparatus as set forth in claim 20,
wherein the initial value is generated using time information contained in a header portion of the stream.

24. The encrypting apparatus as set forth in claim 20,
wherein the initial value is generated using information that is unique for each content, the information being contained in a header portion of the stream.

25. The encrypting apparatus as set forth in claim 20,
wherein the initial value is generated using time information contained in a header portion of the stream and information that is unique for each content, the information being contained in the header portion of the stream.

26. The encrypting apparatus as set forth in claim 20,
wherein the initial value is encrypted.

27. The encrypting apparatus as set forth in claim 20,
wherein the stream is an MPEG stream.

28. The encrypting apparatus as set forth in claim 27,
wherein the header is a pack header, a packet header, or a file header.

29. An encrypting method, comprising the steps of:
generating an initial value using data of a predetermined portion of a stream of content data; and
encrypting the content data using the generated initial value, outputting the encrypted data, and chain-encrypting data of other portions of the content data using the output encrypted data.

30. The encrypting method as set forth in claim 29, further comprising the step of:
dividing the content data into blocks each of which is composed of a plurality of bits,
wherein the encrypting step is performed by encrypting the content data in the unit of a divided block corresponding to block encrypting system.

31. The encrypting method as set forth in claim 29,
wherein the initial value is generated using data contained in a header portion of the stream.

32. The encrypting method as set forth in claim 29,
wherein the initial value is generated using time information contained in a header portion of the stream.

33. The encrypting method as set forth in claim 29,
wherein the initial value is generated using information that is unique for each content, the information being contained in a header portion of the stream.

34. The encrypting method as set forth in claim 29,
wherein the initial value is generated using time information contained in a header portion of the stream and information that is unique for each content, the information being contained in the header portion of the stream.

35. The encrypting method as set forth in claim 29,
wherein the initial value is encrypted.

36. The encrypting method as set forth in claim 29,
wherein the stream is an MPEG stream.

37. The encrypting method as set forth in claim 36,
wherein the header is a pack header, a packet header, or a file header.

38. A decrypting apparatus, comprising:
generating means for generating an initial value using data of a predetermined portion of a stream of content data; and
decrypting means for decrypting data of a first portion of encrypted content data using the initial value, outputting the decrypted data, and chain-decrypting data of a second portion that is different from the first portion using the data of the first portion of the encrypted content data.

39. The decrypting apparatus as set forth in claim 38,
wherein the content data has been encrypted in the unit of a block composed of a plurality of bits, and
wherein the storing means decrypts the encrypted content data in the unit of a block.

40. The decrypting apparatus as set forth in claim 38,
wherein the generating means generates the initial value using data contained in a header portion of the stream.

41. The decrypting apparatus as set forth in claim 38,
wherein the generating means generates the initial value using time information contained in a header portion of the stream.

42. The decrypting apparatus as set forth in claim 38,
wherein the generating means generates the initial value using information unique for each content, the information being contained in a header portion of the stream.

43. The decrypting apparatus as set forth in claim 38,
wherein the generating means generates the initial value using time information contained in a header portion of the stream and information that is unique for each content, the information being contained in the header portion of the stream.

44. The decrypting apparatus as set forth in claim 38,
wherein the generating means decrypts the encrypted initial value.

45. The decrypting apparatus as set forth in claim 38,
wherein the stream is an MPEG stream.

46. The decrypting apparatus as set forth in claim 45,
wherein the header is a pack header, a packet header, or a file header.

47. A decrypting method, comprising the steps of:
generating an initial value using data of a predetermined portion of a stream of content data; and
decrypting data of a first portion of encrypted content data using the initial value and outputting the decrypted data; and
chain-decrypting data of a second portion that is different from the first portion using the data of the first portion of the encrypted content data.

48. The decrypting method as set forth in claim 47,
wherein the content data has been encrypted in the unit of a block composed of a plurality of bits, and
wherein the storing step is performed by decrypting the encrypted content data in the unit of a block.

49. The decrypting method as set forth in claim 47,
wherein the generating step is performed by generating the initial value using data contained in a header portion of the stream.

50. The decrypting method as set forth in claim 47,
wherein the generating step is performed by generating the initial value using time information contained in a header portion of the stream.

51. The decrypting method as set forth in claim 47,
wherein the generating step is performed by generating the initial value using information unique for each content, the information being contained in a header portion of the stream.

52. The decrypting method as set forth in claim 47,
wherein the generating step is performed by generating the initial value using time information contained in a header portion of the stream and information that is unique for each content, the information being contained in the header portion of the stream.

53. The decrypting method as set forth in claim 47,
wherein the generating step is performed by decrypting the encrypted initial value.

54. The decrypting method as set forth in claim 47,
wherein the stream is an MPEG stream.

55. The decrypting method as set forth in claim 54,
wherein the header is a pack header, a packet header, or a file header.

56. A storage medium for storing data decrypted corresponding to a decrypting method, comprising the steps of:
generating an initial value using data of a predetermined portion of a stream of content data; and
decrypting data of a first portion of encrypted content data using the initial value and outputting the decrypted data; and
chain-decrypting data of a second portion that is different from the first portion using the data of the first portion of the encrypted content data.
